# EUROPÄISCHE PATENTSCHRIFT

(11) **EP 3 387 744 B1**
(45) Veröffentlichungstag und Bekanntmachung des Hinweises auf die Patenterteilung: **28.06.2023**
(21) Anmeldenummer: 16804725.6
(22) Anmeldetag: 22.11.2016
(51) Int. Cl.: H02M 3/335

(54) **VERFAHREN UND VORRICHTUNG ZUR REGELUNG EINES GALVANISCH GETRENNTEN GLEICHSPANNUNGSWANDLERS**
METHOD AND DEVICE FOR CONTROLLING A GALVANICALLY ISOLATED DC CONVERTER
PROCÉDÉ ET DISPOSITIF DE RÉGULATION D'UN CONVERTISSEUR CONTINU-CONTINU SÉPARÉ GALVANIQUEMENT

(30) Priorität: 10.12.2015 DE 102015224858
(43) Veröffentlichungstag der Anmeldung: 17.10.2018
(73) Patentinhaber: Robert Bosch GmbH, 70442 Stuttgart (DE)
(72) Erfinder: ESTEGHLAL, Gholamabas, 70499 Stuttgart -Weilimdorf (DE)
(86) Internationale Anmeldenummer: PCT/EP2016/078458
(87) Internationale Veröffentlichungsnummer: WO 2017/097586

(56) Entgegenhaltungen:
- EP-A1- 0 901 215
- DE-A1-102013 216 831
- JP-A- 2002 252 974
- US-A1- 2014 268 904

## Beschreibung

Die Erfindung betrifft ein Verfahren und eine Vorrichtung zur Regelung eines galvanisch getrennten Gleichspannungswandlers. Ferner betrifft die Erfindung einen Antriebsstrang mit einer entsprechenden Vorrichtung und ein Fahrzeug mit einem Antriebsstrang.

### Stand der Technik

Galvanisch getrennte Gleichspannungswandler zur Wandlung einer Eingangs-Gleichspannung in eine Ausgangs-Gleichspannung sind aus dem Stand der Technik bekannt. Es ist bekannt, die Ausgangs-Gleichspannung in Abhängigkeit der Eingangs-Gleichspannung, dem Tastverhältnis einer eingesetzten Vollbrücke und der Transformatorübersetzung zu berechnen. Aus dem Stand der Technik ist es bekannt, die Eingangs-Gleichspannung mittels einer Messeinrichtung zu bestimmen und für die Regelung des Gleichspannungswandlers zu verwenden. Es besteht das Bedürfnis, die kostenintensive Sensorik zur Messung der Eingangs-Gleichspannung zu substituieren.

Die Dokumente JP 2002 252974 A, EP 0 901 215 A1, US 2014/268904 A1 offenbaren Verfahren zur Bestimmung der Eingangsgleichspannung galvanisch getrennter Gleichspannungswandler.

### Offenbarung der Erfindung

Es wird ein Verfahren zur Regelung eines galvanisch getrennten Gleichspannungswandlers bereitgestellt. Der Gleichspannungswandler umfasst eine Vollbrücke zur Wandlung einer Eingangs-Gleichspannung in eine Eingangs-Wechselspannung. Weiter umfasst der Gleichspannungswandler einen Transformator zur Übersetzung der Eingangs-Wechselspannung in eine Ausgangs-Wechselspannung. Weiter umfasst der Gleichspannungswandler einen Gleichrichter zur Wandlung der Ausgangs-Wechselspannung in eine Ausgangs-Gleichspannung. Das Verfahren umfasst die Schritte gemäß Anspruch 1.

Es wird ein Verfahren zur Regelung eines galvanisch getrennten Gleichspannungswandlers bereitgestellt. Das Verfahren umfasst das Ermitteln des Tastverhältnisses der Vollbrücke. Hierzu wird das Tastverhältnis der Vollbrücke, die zur Wandlung einer Eingangs-Gleichspannung in eine Eingangs-Wechselspannung dient, dem Verfahren bereitgestellt. Hierfür sind alle Verbindungs- und Kommunikationsmöglichkeiten denkbar, mit denen die Information über das Tastverhältnis an die das Verfahren ausführende Vorrichtung übermittelt wird. Es besteht auch die Möglichkeit, dass das Tastverhältnis beispielsweise anhand eines Kennfeldes und aktuellen Betriebsparametern der Vollbrücke ausgelesen wird. In einem weiteren Schritt wird das ermittelte Tastverhältnis mit einem vorgebbaren Tastverhältnisschwellwert verglichen. Es wird die Differenz zwischen dem ermittelten Tastverhältnis und dem Tastverhältnisschwellwert gebildet. In Abhängigkeit des Vergleichs wird ein adaptierter Wert des Tastverhältnisses bestimmt, welcher bei der Berechnung der Eingangs-Gleichspannung berücksichtigt wird. Die Eingangs-Gleichspannung wird in Abhängigkeit eines Eingangs-Stroms, der Ausgangs-Gleichspannung, einem Übersetzungsverhältnis des Transformators und dem adaptierten Wert des Tastverhältnisses der Vollbrücke berechnet.

Vorteilhaft wird für die Regelung ein berechneter Wert der Eingangs-Gleichspannung verwendet, so dass auf eine Sensorik zur Messung der Eingangs-Gleichspannung verzichtet werden kann.

Gemäß der Erfindung wird der adaptierte Wert des Tastverhältnisses als ermitteltes Tastverhältnis bestimmt, falls das ermittelte Tastverhältnis größer als der Tastverhältnisschwellwert ist. Der adaptierte Wert des Tastverhältnisses wird als Tastverhältnisschwellwert bestimmt, falls das ermittelte Tastverhältnis kleiner als der Tastverhältnisschwellwert ist.

In Abhängigkeit des Vergleichs, oder der Differenz, des ermittelten Tastverhältnisses mit einem vorgebbaren Tastverhältnisschwellwert wird ein adaptierter Wert des Tastverhältnisses bestimmt. Falls das ermittelte Tastverhältnis größer als der Tastverhältnisschwellwert ist, wird der adaptierte Wert des Tastverhältnisses auf den Wert des ermittelten Tastverhältnisses festgesetzt. Falls das ermittelte Tastverhältnis kleiner als der Tastverhältnisschwellwert ist, so wird der adaptierte Wert auf den Tastverhältnisschwellwert festgesetzt.

Vorteilhaft wird somit ein Verfahren zur Regelung eines galvanisch getrennten Gleichspannungswandlers bereitgestellt, dass eine zuverlässige Berechnung einer Eingangs-Gleichspannung für alle möglichen Tastverhältnisse ermöglicht.

In einer anderen Ausgestaltung der Erfindung umfasst der Gleichspannungswandler weiter einen Kondensator zur Glättung der Ausgangs-Gleichspannung. Die geglättete Ausgangs-Gleichspannung wird Kondensatorspannung genannt. Für die Berechnung der Eingangs-Gleichspannung wird die Ausgangs-Gleichspannung in Abhängigkeit der Kondensatorspannung bestimmt. Hierzu entspricht die Kondensatorspannung einer ermittelten Kondensatorspannung, falls die ermittelte Kondensatorspannung innerhalb eines vorgebbaren Kondensatorspannungsbereichs liegt. Die Kondensatorspannung entspricht dem unteren Grenzwert des Kondensatorspannungsbereichs, falls die ermittelte Kondensatorspannung kleiner als der untere Grenzwert des Kondensatorspannungsbereichs ist. Die Kondensatorspannung entspricht dem oberen Grenzwert des Kondensatorspannungsbereichs, falls die ermittelte Kondensatorspannung größer als der obere Grenzwert des Kondensatorspannungsbereichs ist.

Es wird ein Verfahren zur Bestimmung der Kondensatorspannung bereitgestellt, die für die Ermittlung der Ausgangs-Gleichspannung und der Eingangs-Gleichspannung verwendet wird. Hierzu wird die Kondensatorspannung mittels einer Spannungssensoreinrichtung oder mittels eines Beobachters ermittelt. In Abhängigkeit der ermittelten Größe wird die für die Berechnung zu verwendende Kondensatorspannung bestimmt. Die Bestimmung erfolgt derart, dass ein vorgebbarer Kondensatorspannungsbereich nicht verlassen wird. Somit wird der für die Berechnung zu verwendende Kondensatorspannungswert begrenzt falls der ermittelte Wert zu hoch oder zu gering wäre.

Vorteilhaft wird somit eine Möglichkeit geschaffen, einen für die Berechnung notwendigen Kondensatorspannungswert zur Verfügung zu stellen, mit dem eine Berechnung der Eingangs-Gleichspannung möglich ist.

In einer anderen Ausgestaltung der Erfindung umfasst der Gleichspannungswandler weiter eine Eingangs-Gleichspannungs-Messeinrichtung zur Messung der Eingangs-Gleichspannung. Das Verfahren umfasst folgende weitere Schritte:
- Erfassen einer gemessenen Eingangs-Gleichspannung mittels der Eingangs-Gleichspannungs-Messeinrichtung;
- Vergleichen der erfassten Eingangs-Gleichspannung mit der berechneten Eingangs-Gleichspannung;
- Feststellen eines Defektes, falls der Betrag der Abweichung der gemessenen Eingangs-Gleichspannung von der berechneten Eingangs-Gleichspannung größer als ein vorgebbarer Abweichungsschwellwert ist.

Zur Absicherung der berechneten Eingangs-Gleichspannung umfasst das Verfahren in dieser Ausgestaltung weitere Schritte. Die Eingangs-Gleichspannung wird hierzu mittels einer Sensorik, beispielsweise einer Eingangs-Gleichspannungs-Messeinrichtung, erfasst. Die erfasste Eingangs-Gleichspannung wird mit der berechneten Eingangs-Gleichspannung verglichen. Somit wird eine Differenz zwischen der erfassten Eingangs-Gleichspannung und der berechneten Eingangs-Gleichspannung festgestellt. Falls die Differenz oder der Betrag der Abweichung der gemessenen Eingangs-Gleichspannung von der berechneten Eingangs-Gleichspannung größer als ein vorgebbarer Abweichungsschwellwert ist, so wird ein Defekt festgestellt. Der Defekt tritt beispielsweise an der Eingangs-Gleichspannungs-Messeinrichtung (defekter Sensor, Lötverbindung, Korrosion, u.a.) auf. Falls die Berechnung die Eingangs-Gleichspannung mittels mehrfach abgesicherter Logikeinheiten erfolgt und diese nicht als fehlerhaft erkannt werden, ist die Wahrscheinlichkeit eines Fehlers oder Defektes an der Eingangs-Gleichspannungs-Sensorik wahrscheinlich. Alternativ kann auch im Rahmen des Verfahrens zur Berechnung der Eingangs-Gleichspannung ein Fehler auftreten (fehlerhafte Berechnung, fehlerhafter Empfang der Eingangsgrößen für die Berechnung).

Ferner betrifft die Erfindung ein Computerprogramm, das eingerichtet ist, die bisher beschriebenen Verfahren auszuführen.

Ferner umfasst die Erfindung ein maschinenlesbares Speichermedium, auf dem das beschriebene Computerprogramm gespeichert ist.

Ferner umfasst die Erfindung eine Vorrichtung zur Regelung eines galvanisch getrennten Gleichspannungswandlers. Die Vorrichtung ist dazu eingerichtet, ein Verfahren, wie bisher beschrieben, auszuführen.

Vorteilhaft wird somit eine Vorrichtung bereitgestellt, die derart eingerichtet ist, dass die beschriebenen Verfahren zur Regelung eines galvanisch getrennten Gleichspannungswandlers ausgeführt werden können.

Ferner umfasst die Erfindung einen Antriebsstrang mit einer beschriebenen Vorrichtung. Ein derartiger Antriebsstrang dient beispielsweise dem Antrieb eines elektrischen Fahrzeuges. Ein Gleichspannungswandler dient dabei insbesondere der Wandlung einer Hochvoltgleichspannung einer Traktionsbatterie in eine Niedervoltspannung zur Versorgung eines elektrischen Bordnetzes eines Fahrzeugs.

Vorteilhaft wird somit ein Antriebsstrang bereitgestellt, der eine Vorrichtung zur Regelung eines galvanisch getrennten Gleichspannungswandlers umfasst.

Ferner umfasst die Erfindung ein Fahrzeug, mit einem beschriebenen Antriebsstrang. Vorteilhaft wird somit ein Fahrzeug bereitgestellt, welches auch eine Vorrichtung zur Regelung eines galvanisch getrennten Gleichspannungswandlers umfasst.

Es versteht sich, dass die Merkmale, Eigenschaften und Vorteile des erfindungsgemäßen Verfahrens entsprechend auf die Vorrichtung bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   einen schematisch dargestellten Gleichspannungswandler mit einer Vorrichtung,
Figur 2
   ein schematisch dargestelltes Fahrzeug mit einem Antriebsstrang und einer Vorrichtung,
Figur 3
   ein Verfahren zur Regelung eines galvanisch getrennten Gleichspannungswandlers.

### Ausführungsformen der Erfindung

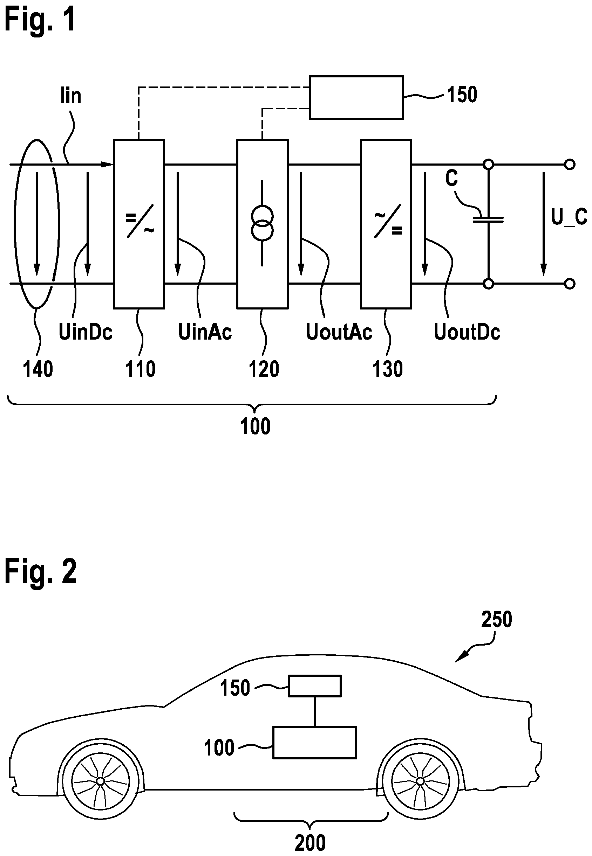

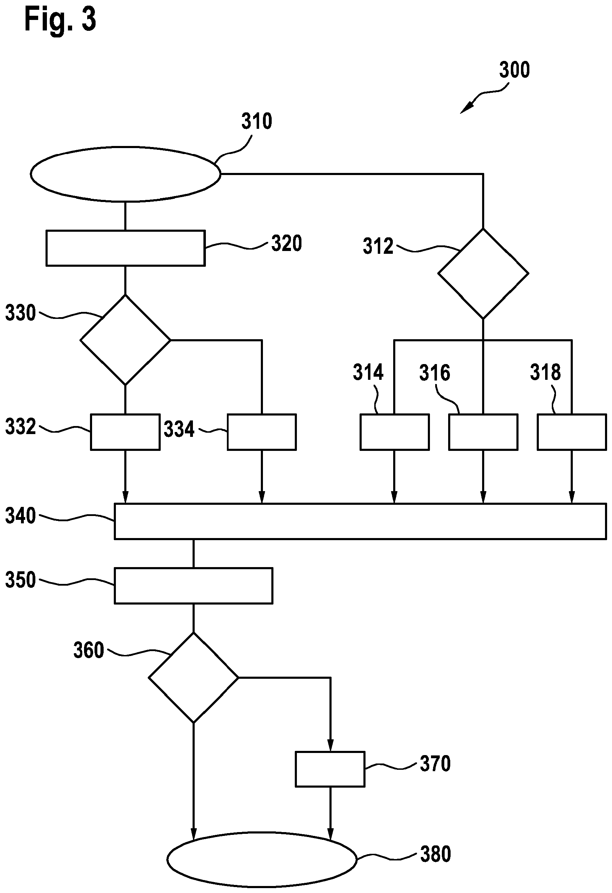

Die Figur 1 zeigt eine schematische Darstellung eines Gleichspannungswandlers 100. Der Gleichspannungswandler 100 umfasst eine Vollbrücke 110 zur Wandlung einer Eingangs-Gleichspannung UinDC in eine Eingangs-Wechselspannung UinAC. Weiter umfasst der Gleichspannungswandler 100 einen Transformator 120 zur Übersetzung der Eingangs-Wechselspannung UinAC in eine Ausgangs-wechselspannung UoutAC. Der Transformator weist dabei ein bauartbedingtes Übersetzungsverhältnis U auf. In Abhängigkeit des Übersetzungsverhältnisses U wird die Eingangs-Wechselspannung UinAC in eine, insbesondere kleinere, Ausgangswechselspannung UoutAC umgesetzt. Weiter umfasst der Gleichspannungswandler 100 einen Gleichrichter 130 zur Gleichrichtung der Ausgangs-wechselspannung UoutAC in eine Ausgangs-Gleichspannung UoutDC. Ausgangsseitig parallel zu dem Gleichrichter 130 zur Gleichrichtung der Ausgangs-wechselspannung UoutAC ist ein Kondensator C dargestellt zur Glättung der Ausgangs-Gleichspannung UoutAC. Diese geglättete Kondensatorspannung U_C kann mittels einer Spannungs-Messeinrichtung oder -Sensorik ermittelt oder mittels einem Beobachter oder Beobachtermodell ermittelt werden. Optional umfasst der Gleichspannungswandler 100 weiter eine Eingangs-Gleichspannungs-Messeinrichtung 140, zur Messung der Eingangs-Gleichspannung UinDC des Gleichspannungswandlers 100. Der gemessene Wert der Eingangs-Gleichspannung UinDC wird im Folgenden mit UinDCm gekennzeichnet. Der Strom in dem Gleichspannungswandler 100, beziehungsweise in der Vollbrücke 110, wird im Folgenden mit I_in gekennzeichnet. Die Figur 1 zeigt weiter eine Vorrichtung 150 zur Regelung des galvanisch getrennten Gleichspannungswandlers 100 gemäß dem auch in Figur 3 beschriebenen Verfahren. Die Vorrichtung empfängt eine Information über das Tastverhältnis D der Vollbrücke 110. Weiter empfängt die Vorrichtung 150 eine Information über das Übersetzungsverhältnis U des Transformators 120.

Figur 2 zeigt ein Fahrzeug 250 mit einem Antriebsstrang 200. Der Antriebsstrang 200 umfasst den Gleichspannungswandler 100 sowie die Vorrichtung 150. Es ist vorgesehen, dass insbesondere an den Antriebsstrang 200, beziehungsweise insbesondere an den Gleichspannungswandler 100, eingangsseitig eine Traktionsbatterie für einen elektrischen Antrieb des Fahrzeugs angeschlossen werden kann. Diese Traktionsbatterie ist aus Übersichtlichkeitsgründen in der Figur nicht dargestellt. Weiter ist vorgesehen, dass ausgangsseitig an den Antriebsstrang 200, insbesondere an den Gleichspannungswandler 100, ein Niederspannungsbordnetz eines Fahrzeuges angeschlossen werden kann. Dieses Niederspannungsbordnetz ist aus Übersichtlichkeitsgründen in der Figur nicht dargestellt.

Figur 3 zeigt ein Verfahren 300 zur Regelung eines galvanisch getrennten Gleichspannungswandlers 100 welches insbesondere mittels einer Vorrichtung 150 ausgeführt wird. Das Verfahren beginnt mit Schritt 310. In Schritt 320 wird das Tastverhältnis D der Vollbrücke 110 zur Wandlung einer Eingangs-Gleichspannung UinDC in eine Eingangs-Wechselspannung UinAC ermittelt.

Diesen Wert empfängt die Vorrichtung 150 zur Regelung des galvanisch getrennten Gleichspannungswandlers 100. In dem folgenden Schritt 330 wird der Wert des ermittelten Tastverhältnisses D mit einem vorgebbaren Tastverhältnisschwellwert Dth verglichen. Der vorgebbare Tastverhältnisschwellwert Dth wird hierzu insbesondere in Abhängigkeit von der zu erwartenden Last und dem sich daraus ergebenden Eingangsstrom I_in appliziert. Falls das ermittelte Tastverhältnis D größer als der Tastverhältnisschwellwert Dth ist, wird in Schritt 332 als adaptierter Wert des Tastverhältnisses D_ad, das ermittelte Tastverhältnis D festgesetzt. Falls das ermittelte Tastverhältnis D kleiner als der Tastverhältnisschwellwert Dth ist, wird in Schritt 334 als adaptierter Wert des Tastverhältnisses D_ad der vorgebbare Tastverhältnisschwellwert Dth festgesetzt. Im Folgenden Schritt 340 wird eine Eingangs-Gleichspannung UinDCcalc berechnet. Dies geschieht in Abhängigkeit des Eingangs-Stroms I_in, der Ausgangs-Gleichspannung UoutDC, dem Übersetzungsverhältnis U des Transformators 120, und dem adaptierten Wert des Tastverhältnisses D_ad der Vollbrücke 110.

Die Ausgangs-Gleichspannung UoutDC wird insbesondere in Abhängigkeit der Kondensatorspannung U_C bestimmt. Hierzu wird in Schritt 312 die ermittelte Kondensatorspannung U_Cm mit einem vorgebbaren Kondensatorspannungsbereich, der eine untere Grenze U_Cr1 und eine obere Grenze U_Cr2 aufweist, verglichen. Die Kondensatorspannung U_C entspricht 316 der ermittelten Kondensatorspannung U_Cm, falls die ermittelte Kondensatorspannung U_Cm innerhalb des Kondensatorspannungsbereichs U_Cr1..U_Cr2 liegt. Die Kondensatorspannung U_C entspricht 314 dem unteren Grenzwert des Kondensatorspannungsbereichs U_Cr1, falls die ermittelte Kondensatorspannung U_Cm kleiner als der untere Grenzwert des Kondensatorspannungsbereichs U_Cr1 ist. Die Kondensatorspannung U_C entspricht 318 dem oberen Grenzwert des Kondensatorspannungsbereichs U_Cr2, falls die ermittelte Kondensatorspannung U_Cm größer als der obere Grenzwert des Kondensatorspannungsbereichs U_Cr2 ist. Die Ausgangs-Gleichspannung UoutDC wird in Abhängigkeit dieses Kondensatorspannungswertes U_C bestimmt.

Optional umfasst das Verfahren weitere Schritte. In Schritt 350 wird mittels der Eingangs-Gleichspannungs-Messeinrichtung 140 eine Eingangs-Gleichspannung UinDCm erfasst. In Schritt 360 wird die erfasste Eingangs-Gleichspannung UinDCm mit der berechneten Eingangs-Gleichspannung UinDCcalc verglichen. Falls der Betrag der Abweichung oder die Differenz der gemessen Eingangs-Gleichspannung UinDCm von der berechneten Eingangs-Gleichspannung UinDCcalc größer als ein vorgebbarer Abweichungsschwellwert Dif ist, so wird in Schritt 370 ein Defekt festgestellt. Insbesondere wird ein Defekt des Spannungssensors festgestellt, falls durch weitere Absicherungsmaßnahmen, beispielsweise redundante Absicherung der Berechnungseinheiten zur Berechnung der Eingangs-Gleichspannung, ein Defekt der Regelung ausgeschlossen wird. Anschließend kann das System in einen sicheren Zustand, beispielsweise Beenden des Betriebs des Gleichspannungswandlers 100, überführt werden. Mit Schritt 380 endet das Verfahren.

## Patentansprüche

1. Verfahren (300) zur Regelung eines galvanisch getrennten Gleichspannungswandlers (100),
wobei der Gleichspannungswandler (100)
eine Vollbrücke (110) zur Wandlung einer Eingangs-Gleichspannung (UinDC) in eine Eingangs-Wechselspannung (UinAC),
einen Transformator (120) zur Übersetzung der Eingangs-Wechselspannung (UinAC) in eine Ausgangs-Wechselspannung (UoutAC),
einen Gleichrichter (130) zur Wandlung der Ausgangs-Wechselspannung (UoutAC) in eine Ausgangs-Gleichspannung (UoutDC)
umfasst,
mit den Schritten:
Ermitteln (320) des Tastverhältnisses (D) der Vollbrücke (110);
Vergleichen (330) des ermittelten Tastverhältnisses (D) mit einem Tastverhältnisschwellwert (Dth);
Bestimmen eines adaptierten Wertes (D_ad) des Tastverhältnisses in Abhängigkeit des Vergleichs
Berechnen (340) einer Eingangs-Gleichspannung (UinDCcalc) in Abhängigkeit eines Eingang-Stroms (I_in), der Ausgangs-Gleichspannung (UoutDC), einem Übersetzungsverhältnisses (U) des Transformators (120) und dem adaptierten Wert (D_ad) des Tastverhältnisses der Vollbrücke (119),
wobei als adaptierter Wert (D_ad) des Tastverhältnisses das ermittelte Tastverhältnis (D) bestimmt wird, falls das ermittelte Tastverhältnis (D) größer als der Tastverhältnisschwellwert (Dth) ist und als adaptierter Wert (D_ad) des Tastverhältnisses der Tastverhältnisschwellwert (Dth) bestimmt wird, falls das ermittelte Tastverhältnis (D) kleiner als der Tastverhältnisschwellwert (Dth) ist.

2. Verfahren nach dem vorhergehenden Anspruch,
wobei der Gleichspannungswandler (100) weiter einen Kondensator (C) zur Glättung der Ausgangs-Gleichspannung (UoutDC) zu einer Kondensatorspannung (U_C) umfasst,
und die Ausgangs-Gleichspannung (UoutDC) in Abhängigkeit der Kondensatorspannung (U_C) bestimmt wird, wobei die Kondensatorspannung (U_C) einer ermittelten Kondensatorspannung (U_Cm) entspricht (316), falls die ermittelte Kondensatorspannung innerhalb eines vorgebbaren Kondensatorspannungsbereichs (U_Cr1..U_Cr2) liegt und
die Kondensatorspannung (U_C) dem unteren Grenzwert des Kondensatorspannungsbereichs (U_Cr1) entspricht (314), falls die ermittelte Kondensatorspannung (U_Cm) kleiner als der untere Grenzwert des Kondensatorspannungsbereichs (U_Cr1) ist und
die Kondensatorspannung (U_C) dem oberen Grenzwert des Kondensatorspannungsbereichs (U_Cr2) entspricht (318), falls die ermittelte Kondensatorspannung (U_Cm) größer als der obere Grenzwert des Kondensatorspannungsbereichs (U_Cr2) ist.

3. Verfahren (300) zur Regelung eines galvanisch getrennten Gleichspannungswandlers (100) nach einem der vorhergehenden Ansprüche,
wobei der Gleichspannungswandler (100) weiter eine Eingangs-Gleichspannungs-Messeinrichtung (140) zur Messung der Eingangs-Gleichspannung (UinDC) umfasst,
und das Verfahren (300) weitere Schritte umfasst:
Erfassen (350) einer gemessenen Eingangs-Gleichspannung (UinDCm) mittels der Eingangs-Gleichspannungs-Messeinrichtung (140);
Vergleichen (360) der erfassten Eingangs-Gleichspannung (UinDCm) mit der berechneten Eingangs-Gleichspannung (UinDCcalc);
Feststellen (370) eines Defektes falls der Betrag der Abweichung der gemessenen Eingangs-Gleichspannung (UinDCm) von der berechneten Eingangs-Gleichspannung (UinDCcalc) größer als ein vorgebbarer Abweichungsschwellwert (Diff) ist.

4. Vorrichtung (150) zur Regelung eines galvanisch getrennten Gleichspannungswandlers (100), wobei der Gleichspannungswandler eine Vollbrücke zur Wandlung einer Eingangs-Gleichspannung (UinDC) in eine Eingangs-Wechselspannung (UinAC), einen Transformator zur Übersetzung der Eingangs-Wechselspannung (UinAC) in eine Ausgangs-Wechselspannung (UoutAC), einen Gleichrichter zur Wandlung der Ausgangs-Wechselspannung (UoutAC) in eine Ausgangs-Gleichspannung (UoutDC) umfasst, wobei die Vorrichtung (150) dazu eingerichtet ist, ein Verfahren (300) nach einem der Ansprüche 1 bis 3 auszuführen.

5. Antriebsstrang mit einer Vorrichtung gemäß Anspruch 4.

6. Fahrzeug mit einem Antriebsstrang nach Anspruch 5.

7. Computerprogramm umfassend Befehle, die bewirken, dass die Vorrichtung des Anspruchs 4 die Verfahrensschritte nach Anspruch 1 ausführt.

8. Maschinenlesbares Speichermedium, auf dem das Computerprogramm nach Anspruch 7 gespeichert ist.

## Claims

1. Method (300) for regulating a galvanically isolated DC-DC voltage converter (100),
wherein the DC-DC voltage converter (100) comprises a full bridge (110) for converting a DC input voltage (UinDC) into an AC input voltage (UinAC),
a transformer (120) for transforming the AC input voltage (UinAC) into an AC output voltage (UoutAC),
a rectifier (130) for converting the AC output voltage (UoutAC) into a DC output voltage (UoutDC),
said method having the steps of:
ascertaining (320) the duty cycle (D) of the full bridge (110);
comparing (330) the ascertained duty cycle (D) with a duty cycle threshold value (Dth);
determining an adapted value (D_ad) of the duty cycle depending on the comparison;
calculating (340) a DC input voltage (UinDCcalc) depending on an input current (I_in), the DC output voltage (UoutDC), a transformation ratio (U) of the transformer (120) and the adapted value (D_ad) of the duty cycle of the full bridge (110),
wherein the ascertained duty cycle (D) is determined as the adapted value (D_ad) of the duty cycle if the ascertained duty cycle (D) is greater than the duty cycle threshold value (Dth) and the duty cycle threshold value (Dth) is determined as the adapted value (D_ad) of the duty cycle if the ascertained duty cycle (D) is lower than the duty cycle threshold value (Dth) .

2. Method according to the preceding claim,
wherein the DC-DC voltage converter (100) further comprises a capacitor (C) for smoothing the DC output voltage (UoutDC) to form a capacitor voltage (U_C),
and the DC output voltage (UoutDC) is determined depending on the capacitor voltage (U_C), wherein the capacitor voltage (U_C) corresponds (316) to an ascertained capacitor voltage (U_Cm) if the ascertained capacitor voltage is within a predefinable capacitor voltage range (U_Cr1..U_Cr2) and
the capacitor voltage (U_C) corresponds (314) to the lower limit value of the capacitor voltage range (U_Cr1) if the ascertained capacitor voltage (U_Cm) is lower than the lower limit value of the capacitor voltage range (U_Cr1) and
the capacitor voltage (U_C) corresponds (318) to the upper limit value of the capacitor voltage range (U_Cr2) if the ascertained capacitor voltage (U_Cm) is greater than the upper limit value of the capacitor voltage range (U_Cr2).

3. Method (300) for regulating a galvanically isolated DC-DC voltage converter (100) according to one of the preceding claims,
wherein the DC-DC voltage converter (100) further comprises a DC input voltage measuring device (140) for measuring the DC input voltage (UinDC),
and the method (300) comprises the further steps of:
detecting (350) a measured DC input voltage (UinDCm) by means of the DC input voltage measuring device (140);
comparing (360) the detected DC input voltage (UinDCm) with the calculated DC input voltage (UinDCcalc);
establishing (370) a fault if the magnitude of the deviation of the measured DC input voltage (UinDCm) from the calculated DC input voltage (UinDCcalc) is greater than a predefinable deviation threshold value (Diff).

4. Apparatus (150) for regulating a galvanically isolated DC-DC voltage converter (100), wherein the DC-DC voltage converter comprises a full bridge for converting a DC input voltage (UinDC) into an AC input voltage (UinAC), a transformer for transforming the AC input voltage (UinAC) into an AC output voltage (UoutAC), a rectifier for converting the AC output voltage (UoutAC) into a DC output voltage (UoutDC), wherein the apparatus (150) is configured to perform a method (300) according to one of Claims 1 to 3.

5. Powertrain having an apparatus according to Claim 4.

6. Vehicle having a powertrain according to Claim 5.

7. Computer program comprising commands which cause the apparatus of Claim 4 to perform the method steps according to Claim 1.

8. Machine-readable storage medium on which the computer program according to Claim 7 is stored.

## Revendications

1. Procédé (300) destiné à réguler un convertisseur continu-continu (100) à isolation galvanique,
dans lequel le convertisseur continu-continu (100) comprend
un pont complet (110) destiné à convertir une tension continue d'entrée (UinDC) en une tension alternative d'entrée (UinAC),
un transformateur (120) destiné à transformer la tension alternative d'entrée (UinAC) en une tension alternative de sortie (UoutAC),
un redresseur (130) destiné à convertir la tension alternative de sortie (UoutAC) en une tension continue de sortie (UoutDC),
comprenant les étapes consistant à :
déterminer (320) le rapport cyclique (D) du pont complet (110) ;
comparer (330) le rapport cyclique (D) déterminé à une valeur de seuil de rapport cyclique (Dth) ;
déterminer une valeur adaptée (D_ad) du rapport cyclique en fonction de la comparaison,
calculer (340) une tension continue d'entrée (UinDCcalc) en fonction d'un courant d'entrée (I_in), de la tension continue de sortie (UoutDC), d'un rapport de transformation (U) du transformateur (120) et de la valeur adaptée (D_ad) du rapport cyclique du pont complet (110),
dans lequel on détermine en tant que valeur adaptée (D_ad) du rapport cyclique le rapport cyclique déterminé (D) dans le cas où le rapport cyclique déterminé (D) est supérieur à la valeur de seuil de rapport cyclique (Dth) et on détermine en tant que valeur adaptée (D_ad) du rapport cyclique la valeur de seuil de rapport cyclique (Dth) dans le cas où le rapport cyclique déterminé (D) est inférieur à la valeur de seuil de rapport cyclique (Dth).

2. Procédé selon la revendication précédente,
dans lequel le convertisseur continu-continu (100) comprend en outre un condensateur (C) destiné à lisser la tension continue de sortie (UoutDC) en une tension de condensateur (U_C),
et la tension continue de sortie (UoutDC) est déterminée en fonction de la tension de condensateur (U_C), dans lequel la tension de condensateur (U_C) correspond (316) à une tension de condensateur (U_Cm) déterminée dans le cas où la tension de condensateur déterminée se situe dans une plage de tension de condensateur (U_Cr1..U_Cr2) pouvant être prédéfinie et
la tension de condensateur (U_C) correspond (314) à la valeur limite inférieure de la plage de tension de condensateur (U_Cr1) dans le cas où la tension de condensateur déterminée (U_Cm) est inférieure à la valeur limite inférieure de la plage de tension de condensateur (U_Cr1) et
la tension de condensateur (U_C) correspond (318) à la valeur limite supérieure de la plage de tension de condensateur (U_Cr2) dans le cas où la tension de condensateur (U_Cm) déterminée est supérieure à la valeur limite supérieure de la plage de tension de condensateur (U_Cr2).

3. Procédé (300) destiné à réguler un convertisseur continu-continu (100) à isolation galvanique selon l'une des revendications précédentes,
dans lequel le convertisseur continu-continu (100) comprend en outre un dispositif de mesure de tension continue d'entrée (140) destiné à mesurer la tension continue d'entrée (UinDC),
et le procédé (300) comprend en outre les étapes consistant à :
détecter (350) une tension continue d'entrée mesurée (UinDCm) au moyen du dispositif de mesure de tension continue d'entrée (140) ;
comparer (360) la tension continue d'entrée détectée (UinDCm) à la tension continue d'entrée calculée (UinDCcalc) ;
établir (370) un défaut dans le cas où la valeur de l'écart entre la tension continue d'entrée mesurée (UinDCm) et la tension continue d'entrée calculée (UinDCcalc) est supérieure à une valeur de seuil d'écart (Diff) pouvant être prédéfinie.

4. Dispositif (150) destiné à réguler un convertisseur de tension continu-continu (100) à isolation galvanique, dans lequel le convertisseur continu-continu comprend un pont complet destiné à convertir une tension continue d'entrée (UinDC) en une tension alternative d'entrée (UinAC), un transformateur destiné à transformer la tension alternative d'entrée (UinAC) en une tension alternative de sortie (UoutAC), un redresseur destiné à convertir la tension alternative de sortie (UoutAC) en une tension continue de sortie (UoutDC), dans lequel le dispositif (150) est conçu pour mettre en œuvre un procédé (300) selon l'une des revendications 1 à 3.

5. Chaîne de traction comprenant un dispositif selon la revendication 4.

6. Véhicule équipé d'une chaîne de traction selon la revendication 5.

7. Programme d'ordinateur comprenant des instructions qui font en sorte que le dispositif selon la revendication 4 mette en œuvre les étapes du procédé selon la revendication 1.

8. Support d'enregistrement lisible par machine sur lequel est stocké le programme d'ordinateur selon la revendication 7.
